# EUROPEAN PATENT APPLICATION

(11) **EP 1 499 104 A1**
(43) Date of publication of application: **19.01.2005**
(21) Application number: 03723177.6
(22) Date of filing: 23.04.2003
(51) Int. Cl.: H04N 1/21, G06F 12/00, G06F 17/30, G11B 27/00

(54) **INFORMATION RECORDING METHOD, INFORMATION RECORDING TERMINAL, INFORMATION RECORDING SYSTEM, AND RECORDING MEDIUM**

(30) Priority: 24.04.2002 JP 2002122490
(71) Applicant: KONICA MINOLTA HOLDINGS, INC., Tokyo 100-0005 (JP)
(72) Inventor: HUNG, Po-Chieh, Konica Tech. Center Corporation, Hachioji-shi, Tokyo 192-8505 (JP)
(74) Representative: Henkel, Feiler & Hänzel
(86) International application number: PCT/JP2003/005154
(87) International publication number: WO 2004/004311

(57) **Abstract**

An information recording method, including steps of:
creating an identification information specifically in either one of an image information containing one or more set of image data or a recording medium; and
corresponding the image information and the identification information to each other and recording the image information and the identification information on the recording medium.

## Description

### BACKGROUND OF THE INVENTION

The present invention relates to an information recording method, an information recording terminal, an information recording system, and a recording medium, which record image information obtained from captured images.

In recent years, customers are increasing who handle images captured by a camera as digital image information. For example, in the case of digital cameras, image information stored in recording media is read employing a personal computer, whereby it is simple to view images by reproducing them employing image display software installed in the personal computer. Further, it is possible to prepare CG (Computer Graphics) by applying image processing to image information previously captured by photographic means, employing image processing software.

Further, services are available in which images captured by film cameras are converted to digital image information. For example, when exposed negative film strips are brought to photo-service shops such as photofinishing laboratories or order-receiving shops such as convenience stores, the following services are now available. In the photo-service shops, after developing negative film strips, images are read as digital data, employing a scanner and the like, and read image information is written on recording media such as CD-R. Incidentally, when image information obtained from a plurality of film strips is written on one recording medium, a folder is prepared corresponding to each film strip and image information is recorded in the prepared folder.

Subsequently, it is possible for customers, who have received recording media such as CD-R on which image information is written, to display image information read from images recorded on negative film strips on the screen of the personal computer by reproducing those images employing a personal computer in each house. Thus even though customers have no digital camera, it is possible for them to manipulate photographic images as digital image information.

However, in the aforesaid conventional data conversion services, information for identifying image information has not been added and recording media have not collectively been managed. As a result, image information management has optionally been performed by customers. In order for customers to identify recording media themselves and image information stored in the recording media, it is essential for customers to confirm each of the images while displayed and add identification information to image information and recording media. Such operation has been highly complicated. Further, in the case in which image information is stored in a personal computer or on new recording media, when it is not possible to readily identify image information, problems have occurred in which the same image information is repeatedly copied, resulting in waste of recording capacity, and individuality of image information is not assured.

Further, recently, recording media capable of recording a large amount of information have become available. Along with this, it is assumed that work such as retrieval; selection and identification of image information needs still more time and effort.

In addition, most instrumental and vocal information are now handled as digital data. As a result, functions to reproduce instrumental and vocal information have been added to personal computers, whereby it has become possible to enjoy music. Further, software which reproduces instrumental and vocal information as BGM of a slide show has been commercially available. However, it has been difficult to readily utilize such slide shows since the edition of the slide show is troublesome due to the fact that it is necessary to confirm image information and have image information to correspond to instrumental and vocal information.

### SUMMARY OF THE INVENTION

An object of the present invention is to collectively manage image information obtained from photographic images to make it possible to achieve efficient use of the same.

In order to achieve the above object, the present invention is composed of the following structures.

Structure 1 including:
a process which creates specific identification information in either one of image information containing one or more set of image data or recording medium, and
a process in which the aforesaid image information and the aforesaid identification information are made to correspond to each other and recorded on the aforesaid recording medium.

Structure 2 is characterized in further containing a process in which in the information recording method described in Structure 1, the identification information prepared as above is encoded

According to Structure 2, it is possible to maintain, for example, a group of image information in a film strip unit such as a folder or individuality of recording media by preventing or detecting alteration of the data structure of image information recorded on recording media as well as identification information.

Structure 3 is characterized in further containing a process in which the aforesaid image information and the aforesaid identification information are made to correspond to each other and are stored in a storage device in the invention described in Structure 1 or 2.

According to Structure 3, image information and identification information are made to correspond to each other and stored, whereby when the image information recorded on a recording medium is lost or altered, it is possible to retrieve corresponding image information stored in the storage device utilizing the identification information and again provide the desired information.

Structure 4 is characterized in that in any one of the information recording methods described in Structures 1 - 3, the aforesaid identification information includes the information of the owner of the aforesaid recording medium, the information of the recording apparatus which records the aforesaid image information, and the aforesaid identification information on the aforesaid recording medium, and at least one of the area and time related to the aforesaid recording medium.

According to Structure 4, it becomes possible to more efficiently manage image information by utilizing various types of information which correspond to image information.

Structure 5 is characterized in that in the information recording method described in any one of Structures 1 - 4, the aforesaid identification information includes information which is necessary for the color conversion process of the aforesaid image information.

According to Structure 5, in the case in which a recording medium recorded with image information is loaded in a computer and allows the computer to display the image information, it is possible to eliminate the difference in input color characteristics depending on types of information recording terminals, as well as to enhance the color reproduction of image information.

Structure 6 is characterized in that in the image recording method described in any one of Structures 1 - 5, the aforesaid image data are those which are read from the recording medium other than the aforesaid recording media, and at least either DX code information or serial number information, which are read from the aforesaid other recording media, is included in the aforesaid identification information.

According to Structure 6, it is possible to utilize identification information for the image processing and control of image information in such a manner that the photographic speed, the number of exposed frames, and the types of film strips used to capture images are read based the film DX code, and serial number information is read based on the information recorded in other recording media and the identification information of the image information is included. For example, based on the information of the type of film strip included in the DX code read from the other recording media and the serial number, it is possible to estimate the time frame when a film strip was exposed.

Structure 7 is characterized in that in the image recording method described in any one of Structures 1 - 6, the aforesaid identification information is recorded as visible information in some part of the aforesaid recording medium.

According to Structure 7, it is possible to easily identify a recording medium only by viewing it without reference to the information recorded on the recording medium.

Structure 8 is characterized in that in the information recording method described in Structure 7, the aforesaid visible information is recorded in various colors, which are easily identified.

According to Structure 8, since it is possible to visually identity recording media based on visible color applied to recording media without reference to the information recorded on the recording media, it is possible to more easily look for the desired recording medium.

Structure 9 including:
an identification information forming device which forms either image information containing one or more units of mage data and specific identification information in at least one of recording media and a recording device in which the aforesaid image information and the aforesaid identification information are made to correspond to each other and recorded on the aforesaid recording medium.

Structure 10 is an information recording system in which an information recording terminal and a control apparatus are connected via a network and said information recording terminal includes:
a first transmission device which transmits a request for issuing specific identification information to said control apparatus,
a first receiving device which receives the specific identification information from the aforesaid control apparatus,
an identification information providing device which provides image information including a single or plural sets of image data and identification information which had been received by at least one of the recording device, and
a recording device in which the aforesaid image information and the aforesaid identification information are made to correspond to each other and recorded on the aforesaid recording medium, and
the aforesaid control apparatus includes:
   a second receiving device which receives a request for issuing the specific identification information from the aforesaid information recording terminal, an identification information issuing device which issues the specific identification information in response to the aforesaid received issuing request, and
   a second transmission device which transmits the aforesaid issued specific identification information to the aforesaid information recording terminal.

Structure 11 is characterized in that the image information containing a single or plural sets of image data and the identification information being specific to any one of the aforesaid image information and the recording medium are made to correspond to each other and recorded.

According to the invention described in any one of structures 1, 9, 10, and 11, it becomes possible to effectively utilize image data obtained from captured images by collectively managing in a grouped unit. For example, it enables to easily enjoy slide shows by simplifying the operation for selection of image information and the correspondence operation. Further, it is possible to lower related cost, since it is not required to provide an information recording terminal especially for recording identification information.

### BRIEF DESCRIPTION OF THE DRAWINGS

Fig. 1 is a view showing the entire structure of Information Recording System 1.
Fig. 2 is a block diagram showing the functional structure of information recording terminal 40.
Fig. 3 is a flow chart showing steps in which in information recording system 1 shown in Fig. 1, customer 2 brings negative film strip 6 to convenience store 3, and thereafter, image information is used in computer terminal 2a upon receiving information recording medium 5a, on which image information and folder ID are written, as well as retrieving information recording medium 5b.
Fig. 4 is a view showing an example of an image screen constitution (being an image screen listing images) displayed by computer terminal 2a in Fig. 1.
Fig. 5 is a flow chart showing the reproduction process of image information employing computer terminal 2a in Fig. 1.
Fig. 6 is a flow chart showing steps for issuing folder ID employing server 8 in Fig. 1.
Fig. 7 is a conceptual view showing the range in which folder ID becomes specific.
Fig. 8 is a view showing the data structure in information recording medium 5a.
Fig. 9 is a view showing information stored in folder ID upon issuing folder ID in server 8 of Fig. 1.
Fig. 10 is a flow chart showing an information recording process employing CPU 41 in Fig. 2.
Fig. 11 is a view showing an example in which a representative image and acceptance date for each folder are printed on the label surface of information recording medium 5a.

### DETAILED DESCRIPTION OF THE INVENTION

Embodiments according to the present invention will now be detailed with reference to drawings. As used herein, the term "image information" in the above claims refers to a group of image data obtained from recording media which may be negative or positive film strips (may be either developed or not developed) as well as recording media on which image data captured by digital cameras are recorded. It is assumed that a plurality of image data is included. However, one image datum may also be included. Further, data which are obtained by processing image data obtained from photographically captured pictures, while employing a personal computer, are also included in image information.

Incidentally, CPU 41 of information recording terminal 40 in the following embodiment functions as the identification information forming device and the identification information providing device described in the aforesaid claims; communication control section 44 functions as a first transmission device and a first reception device; image reading section 48 functions as a creation device; and image recording section 50 functions as a recording device. Further, server 8 in the following embodiment possesses the second reception device, the identification information issuing device, and the second transmission device in the aforesaid claims.

First, constitutions will be described.

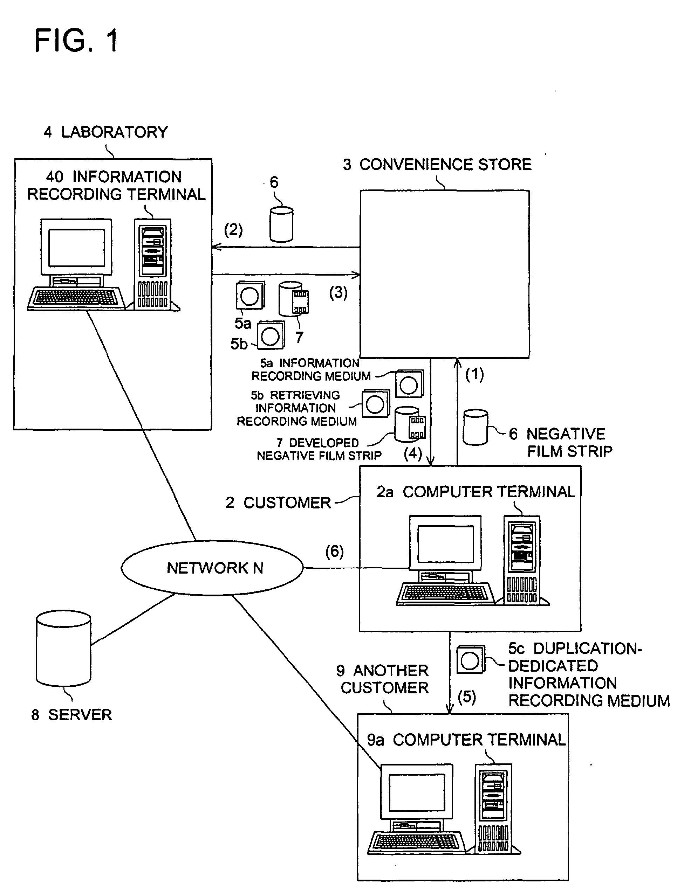

Fig. 1 is a view showing the entire constitution of information recording system 1 in the present embodiment. As shown in Fig. 1, information recording system 1 according to the present embodiment includes customer 2 who supplies negative film strip 6 as well as another customer 9, laboratory 4 which prepares information recording media 5a and 5b upon reading image information from developed negative film strip 7, and order receiving shop 7, such as convenience store 3 which coordinates between customer 2 and laboratory 4.

Incidentally, in Fig. 1, an example is shown in which each of customer 2, convenience store 3, laboratory 4, server 8, and another customer 9 are connected. However, the number of these entities is not particularly limited.

Customer 2 brings negative film strip 6 to convenience store 3 and in due course, receives information recording medium 5a, retrieving information recording medium 5b, and developed negative film strip 7. Customer 2 possesses computer terminal 2a and duplication dedicated information recording medium 5c which is newly prepared by computer terminal 2a is then supplied to another customer 9. Computer terminal 2a is fitted with a control device to control each section of the terminal, a storage device which stores information, an input device which inputs information, an image processing section which performs various types of image processing such as contrast control, and a display which outputs images.

Convenience store 3 receives negative film strip 6 from customer 2 and then forwards it to laboratory 4. Further, above convenience store 3 receives information recording medium 5a, retrieving information recording medium 5b, and developed negative film strip 7 from laboratory 4, and supplies those to customer 2.

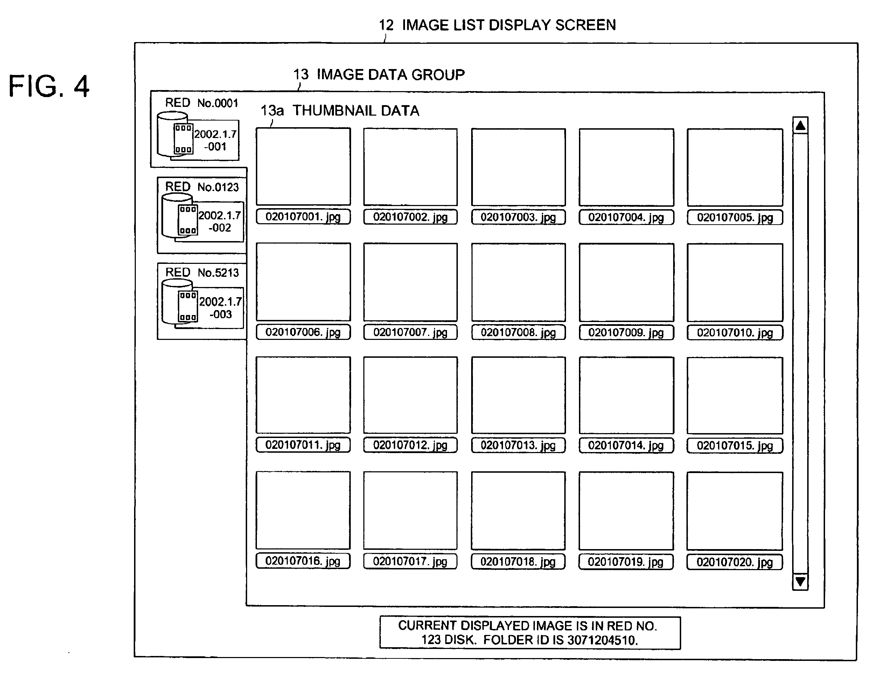

Laboratory 4 is equipped with information recording terminal 40, which prepares developed negative film strip 7 upon developing negative film strip 6, which is supplied from customer 2 via convenience store 3, subsequently reads image information from developed negative film strip 7 and obtains, from server 8, identification information specific to the resulting image information. Thereafter, the resulting image information and identification information are made to correspond to each other and recorded on information recording medium 5a. Further, color information of information recording medium 5a and thumbnail data 13a in Fig. 4 are made to correspond to each other and recorded on information recording medium 5b. Incidentally, the image information recorded herein includes image information of one frame or a plurality of frames. Laboratory 4 forwards information recordings medium 5a, retrieving information recording medium 5b, and developed negative film strip 7 to customer 2 via convenience store 3.

Server 8 is provided with a database, not shown in the figure, and provides various types of information to information recording terminal 40 via network N. Further, when server 8 receives data for requesting issue of folder ID, it issues a new folder ID based on the steps described below and transmits it to information recording terminal 40 via network N, and stores the newly issued folder ID in the aforesaid database to achieve collective management.

Customer 9 possesses computer terminal 9a capable of reading information recording media, inserts information recording medium 5c exclusively for reproduction into computer terminal 9a when received, and is capable of arranging to view the desired image information.

Network N is a communication network constituted of a leased line or an existing general public line, which is capable of being applied to various line modes such as LAN or WAN. Network N includes, for example, various types of communication networks such as a telephone network, an ISDN network, a leased line, a mobile communication network, a communication satellite network, or a CATV network, as well as an internet service provider, connecting these above. Further, Fig. 1 shows an example in which network N and each of the devices and terminals are subjected to wired connection, however, they may also be subjected to wireless connection. In view of reliability of information management, a network is desired which assures security in which it is possible for only specified users to be accessible.

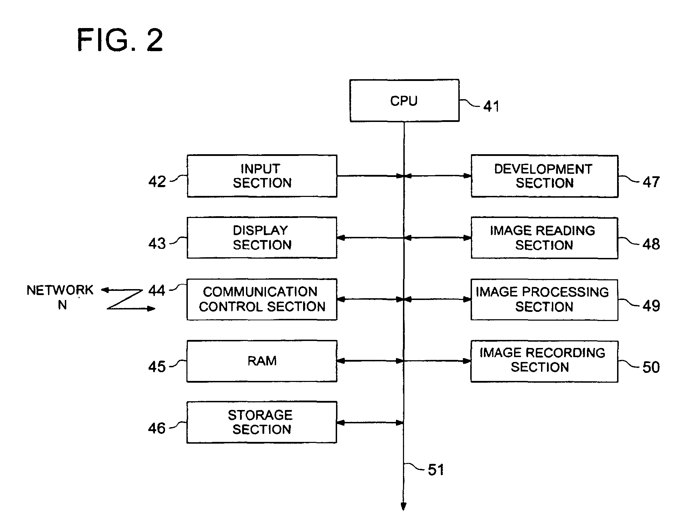

The constitution of information recording terminal 40 in Fig. 1 will now be detailed. Fig. 2 is a chart showing the functional constitution of information recording terminal 40. As shown in Fig. 2, information recording terminal 40 is constituted of CPU 41, input section 42, display section 43, communication control section 44, RAM 45, storage section 46, development section 47, image reading section 48, image processing section 49, and image recording section 50, each of which is interconnected to bus 51 so that mutual data transmission and receiving are possible.

CPU (Central Processing Unit) 41 reads the system program and various types of control programs stored in storage section 46 to spread onto RAM 46 and performs centralized control based on the aforesaid programs. Further, CPU 41 executes various types of processing based on programs expanded on RAM 45 and stores the processed results in RAM 45 and enables them to be displayed on display section 43, and enables the processing results, stored in RAM 45, to be stored in the specified storage location of storage section 46. In practice, CPU 41 reads information recording process program from storage section 46 and executes the information recording process described below.

CPU 41 executes the following operations. During the information recording process, negative film strip 6, submitted by customer 2 via convenience store 3, is developed in development section 47. After preparing developed negative film strip 7, image information and DX code are read from developed negative film strip 7, employing image reading section 48. Further, data for requesting the issue of folder ID are transmitted from communication control section 44 to server 8. Data for requesting the issue of folder ID include information of the region where information recording terminal 40 is installed, information of the supplier of information recording medium 5a and retrieving information recording medium 5b, information of the type of information recording terminal 40, information of the number of developed film strips 7, as well as information (hereinafter referred to as DX code information) such as film speed obtained from the DX code of developed negative film strip 7, the number of exposed frames, the film type, and the date when customer 2 brought negative film strip 6 to convenience store 3. Incidentally, when customer 2 submitted captured images in the form of information recording media such as CD-R instead of negative film strip 6, data for requesting the issue of ID are acceptable to include information such as the serial number recorded on the information recording medium submitted by customer 2 and date when costumer 2 submitted information recording medium to convenience store 3.

Further, CPU 41 obtains folder ID from server 8 via communication control section 44 and prepares a folder including folder ID in information recording medium 5a. Subsequently, image information for each of developed negative film strips 7 is divided to different folders and records the resulting folders on information recording medium 5a.

Any of the colors (white, black, gray, red, orange, yellow, yellowish green, pale blue, blue, violet, pink, or brown) is given onto the label surface of information recording medium 5a to be visually easily distinguishable. Colors employed herein are not limited, but it is preferable to use bright colors which are clearly recognized by any one and colors which are easily memorized under the name of the color. Further, colors are not limited to single colors, and when a plurality of optional colors is combined, it is possible to increase the number of usable colors.

Further, CPU 41 allows color information of information recording medium 5a inputted from input section 42 to correspond to thumbnail data 13a, in Fig. 4, obtained by performing a reduction process of image information employing image processing section 49, and the resulting information is recorded on information recordings medium 5b. Incidentally, image information prior to the reduction process, when differentiated from thumbnail data, is designated as the present image data.

Further, CPU 41 enables the present image data, thumbnail data, and folder ID to correspond to each other and enables them to be stored in storage section 46.

Incidentally, in the above information recording process, when it is not possible to record image information read from developed negative film strip 7 on one information recording medium 5a, image information is divided into several units which are recorded on a plurality of information recording media 5a. Thumbnail data 13a of the present image data recorded on a plurality of image recording media 5a is recorded on one retrieving information recording media 5b.

Input section 42 includes a keyboard fitted with cursor keys, numeral input keys, and various function keys, and signals corresponding to the pushed keys on this keyboard are inputted to CPU 41. Incidentally, if desired, input section 42 may be provided with pointing devices such as a mouse, a touch panel, or other input devices.

Display section 43 is composed of LCD (Liquid Crystal Display), CRT (Cathode Ray Tube), and the like, and displays various types of information inputted from communication control section 44 in response to display signals inputted from CPU 41, image information read from developed negative film strip 7, or thumbnail data 13a formed by image processing section 49.

Communication control section 44 is an interface capable of being connected to transmission media connected to networks such as LAN and WAN, and the Internet, and is composed of a modem or a terminal adaptor. Communication control section 44 controls communication with external devices, such as a film output device, a display device, a diagnostic terminal, a filing device, or a host server via communication lines such as a telephone line, an ISDN line, a wireless communication line, or a CATV line. In practice, communication control section 44 transmits data for requesting the issue of ID to server 8 via network N and receives folder ID from server 8.

RAM (Random Access Memory) 45 forms a work area which temporarily stores various programs executed by CPU 41, as well as data which have been processed employing these various programs.

Storage section 46 incorporates recording medium (not shown) in which programs and data are previously stored, and this recording medium is composed of magnetic optical recording medium or semiconductor memory. The above recording medium is either fixedly or removably installed, and stores system programs, various processing programs corresponding to the aforesaid programs, as well as data processed by various processing programs. Incidentally, programs are stored in the form of program codes capable of being read by computers, and CPU 41 successively executes operations in accordance with the aforesaid program codes.

In practice, storage section 46 stores information record processing programs employed by CPU 41 during the information recording process. Further, storage section 46 also stores image information read by image reading section 48 as well as folder ID inputted from communication control section 44.

Development section 47 develops negative film strip 6 and prepares developed negative film strip 7. Image reading section 48 reads developed negative film strip 7 and prepares image information while converting the read data to digital data.

Based on indication by CPU 41, CPU 41 apples, to image information inputted from image reading section 48, various types of image data processing such as frequency processing which controls image sharpness, gradation processing which converts images to result in suitable contrast, dynamic range compression processing which allows images of a wide dynamic range to result in the desired density range without degrading the contrast of detailed portions of photographic objects, or compression processing which compresses image data employing the specified compression system.

Further, image processing section 49 performs reduction processing for image information (the present image data) read by image reading section 48 and generates thumbnail data 13a. For example, based on the present image data at a high resolution of 2048 x 1536 pixels, it forms 160 x 120-pixel thumbnail data 13a which uses a less amount of memory amount which is suitable for a listing display.

Information recording medium 5a and retrieving information recording medium 5b are removably mounted on image recording section 50, which writes, on information recording medium 5a, image information such as the present image data inputted from image reading section 48 and image processing section 49, as well as folder ID information inputted from communication control section 44.

Employed as information recording medium 5a, which writes information employing image recording section 50 and retrieving information recording medium 5b, may be CD-R, DVD-R or MO capable of performing reading in computer terminals, as well as any of the recording media such as HDD or CD-R capable of performing connection via network N. In view of the capability of being read at many computer terminals and reduced cost, CD-R is suitable.

In the present embodiments, an example will now be described in which image information and folder ID, which are made to correspond to each other, are recorded on blank information recording medium 5a employing image recording section 50, and thumbnail data 13a are recorded on new retrieving information recording medium 5b. However, other than the above, it is also possible to use information recording media which are previously recorded with default instrumental and vocal information and image information.

Further, each of the above functional constitution sections which constitute information recording terminal 40 may be constituted as an individual device. Combinations of a plurality of constitution sections such as CPU 41, image reading section 48, image processing section 49, and image recording section 50, or CPU 41, development section 47 and image reading section 48 may be constituted integrally. Further, in laboratory 4, information recording terminal 40 and connectable printers are installed and image information read by image reading section 48 may be outputted employing any of these printers. The types of printers are not particularly limited, and various types, such as an ink jet type, an electrophotographic type or a silver salt type, may be employed.

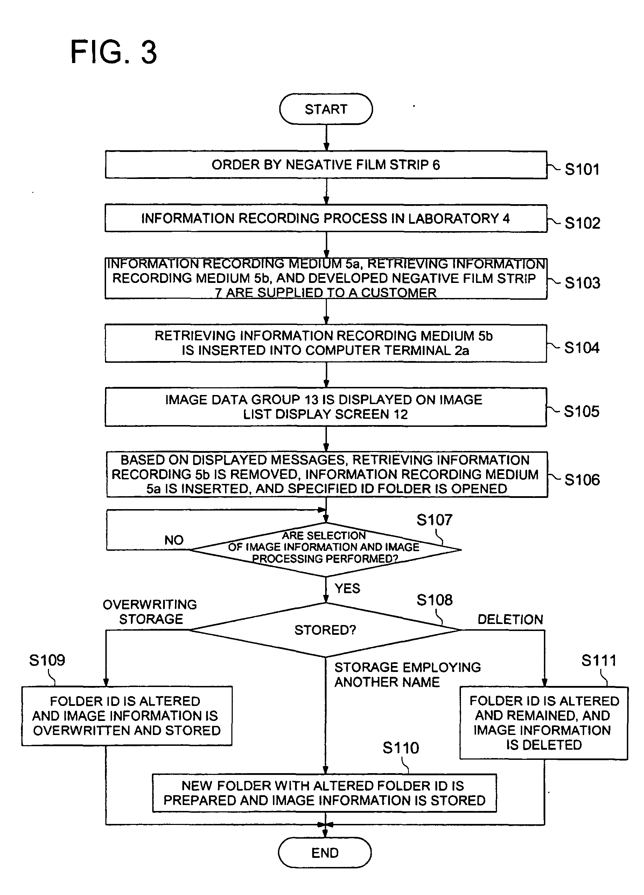

In information recording system 1 constituted as above, steps will now be described with reference to the flow chart in Fig. 3 in which customer 2 submits negative film strip 6 to convenience store 3, subsequently receives information recording medium 5a in which image information and folder ID are written, and then utilizes image information at computer terminal 2a.

Incidentally, in the following, the case in which information recording medium 5a is ordered at convenience store 3 is described only as an example. However, shops for which the order is placed are not limited to convenience store 3 and include any of the shops which place orders for film development and printing from customer 2. Further, steps may be constituted in such a manner that customer 2 places order for information recording medium 5a directly at laboratory 4. Further, the case in which customer 2 submits image information in the form of negative film strip 6 is described as a typical example. Customer 2 may also submit image information in the form of negative film strips and positive film strips (may be developed or not developed) and may submit information recording media such as Compact Flash (a registered trade name) in which image information captured by digital cameras is recorded, Smart Media and Memory Stick (also registered trade names), memory cards such as multimedia cards or SD memory cards, or CD-R.

As shown in Fig. 3, in information recording system 1, customer 2 submits exposed negative film strip 6 in the form of a disposable film camera to a shop such as convenience store 3 ((1) in Fig. 1), and convenience store 3 forwards negative film strip 6 to laboratory 4 ((2) in Fig. 1) (step S101). Photographic images recorded on this negative film strip 6 may be captured by the customer oneself or any of the other customers.

Subsequently, in laboratory 4, negative film strip 6 is developed employing information recording terminal 40; developed negative film strip 7 is prepared; image information and DX code information are read from developed negative film strip 7 (in the case in which negative film strip 6 has been developed, the development process is omitted); thumbnail data 13 are prepared based on the present image data 13a; data for requesting the issue of ID containing above DX code information are transmitted to server 8; folder ID is obtained from server 8; the present image data and folder ID, which are made to correspond to each other, are recorded on information recording medium 5a; and at the same time, thumbnail data 13a, color information of information recording medium 5a, and folder ID which are made to correspond to each other are recoreded on retrieving information recording medium 5b (step S102).

Thereafter, laboratory 4 returns to convenience store 3 information recording medium 5a, retrieving information recording medium 5b, and developed negative film strip 7 ((3) in Fig. 1), which are supplied to customer 2 from convenience store 3 ((4) in Fig. 1) (step S103).

Subsequently, customer 2 who has received retrieving information recording medium 5b from convenience store 3 inserts above retrieving information recording medium 5b into computer terminal 2a possessed by customer 2a (step S104), whereby image list display screen 12, shown in Fig. 4, is displayed on computer terminal 2a. In the above image list display screen, are displayed, for example, a plurality of image data group 13 which is an assembly of thumbnail data 13a and selected image data group 13. Further, when customer 2 selects image data group 13, which is desired to be processed, an album is displayed in which thumbnail data 13a which constitutes selected image data group 13 are arranged is displayed and subsequently, are displayed messages which indicates colors of information recording medium 5a in which selected image data group 13 is recorded and folder ID (step S105).

Based on the messages displayed in the image list display screen shown in Fig. 1, customer 2 removes retrieving information recording medium 5b from computer terminal 2a, inserts the specified information recording media 5a, and opens the folder of the specified folder ID (step S106).

For this operation, for example, in the case in which thumbnail data 13a of a plurality of information recording media 5a are recorded on one retrieving information recording medium 5b, customer 2 is not required to open information recording medium 5 one by one, and can quickly easily open the desired information.

Subsequently, when customer 2 selects image information in the folder opened in step S106 and executes image processing employing the image processing section of computer terminal 2a (step S107; YES), in the case of overwriting storage (step S108; overwriting storage), folder ID is altered and image information is overwritten and stored. On the other hand, in the case in which storage is performed employing another name (step S107; storage employing another name), folder ID is altered, a new folder is prepared, and image information is stored after image processing. Further, in the case in which image information is deleted (step S108; deletion), folder ID is altered and remained, and image information is deleted (step S111).

Specifically in the case in which, for example, image information stored in folder ID 2002331010 is subjected to image processing, overwriting is performed employing the number of 200233011 in which the final number is changed from 0 to 1. When stored employing different number, the final number of the folder ID is changed from 0 to 2. The new folder ID is designated as 20002331012 and the image information after the change is stored. Further, when image information is deleted, the final number of the folder ID is changed from 0 to 9. Subsequently, image information is deleted employing the number of 200231019, and data on the folder ID are only remained. As stated above, when the final number of folder ID is previously secured, it is possible to change folder ID without changing the number of bits of folder ID. Further, by referring to the folder ID, it is possible to find the fact that original image information supplied by information recording medium 5a is subjected to image processing. In addition, when storage is performed employing another name, it is possible to identify folder ID prior to image processing. Further, even though customer 2 loses original image information by performing overwriting or deletion of the image information, it is possible to obtain the desired image information by giving an order to laboratory 4 via convenience store 3 while specifying folder ID.

Further, when image information stored in image recording medium 5a is duplicated in the storage device of computer terminal 2a, or image information which has been subjected to image processing is stored in a storage device, and then is subjected to setting in other information recording media such as blank CD-R or DVD-R, it is possible to prepare duplication-dedicated information recording medium 5c. It is possible to present the resulting duplication-dedicated information recording medium to another customer 9 such as acquaintances or friends (Fig. 1(5)).

Incidentally, an embodiment may be made so that, for example, by enabling server 8 on network N to manage detailed information of folder ID containing variation information and transmitting folder ID from computer terminal 2a to server 8, it is possible to obtain the detailed information of the folder ((6) of Fig. 1).

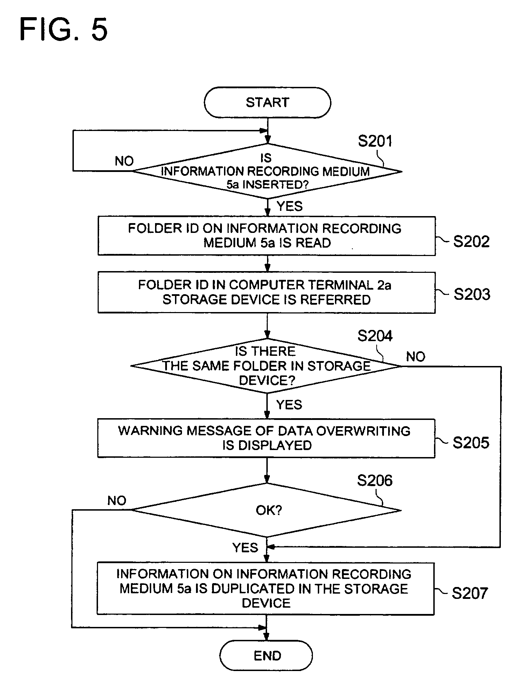

Steps in which customer 2 inserts information recording medium 5a to computer terminal 2a, whereby image information is stored in the storage device of above computer terminal 2a will now be described with reference to Fig. 5.

Fig. 5 is a flow chart showing a duplication process of image information employing computer terminal 2a. As shown in Fig. 5, when the control section of computer terminal 2a is loaded with information recording medium 5a (step S201; YES), folder ID in information recording medium 5a is read (step S202); folder ID of the existing image information is referred to the storage device of computer terminal 2a (step 203); and the presence of the folder having the same ID as in information recording medium 5a is identified (step S204).

Subsequently, when the folder having the same ID as of information recording medium 5a is not present in the storage device of computer terminal 2a (step S204; NO), step S207 follows. On the other hand, when the folder of the same ID is present (step S204; YES), a data overwriting warning message is displayed on the screen of computer terminal 2a which states that the image information of the same ID previously stored in the storage device is overwritten employing image information recorded on image recording medium 5a.

Subsequently, when indication of data overwriting is inputted by the input means (step S206; YES), image processing in the storage means is subjected to overwriting employing image information of information recording medium 5a (step S207) and an image information duplicating process is completed. On the other hand, when indication which prohibits data overwriting is inputted by the input means (step S206; NO), the image information duplicating process is terminated without any operation.

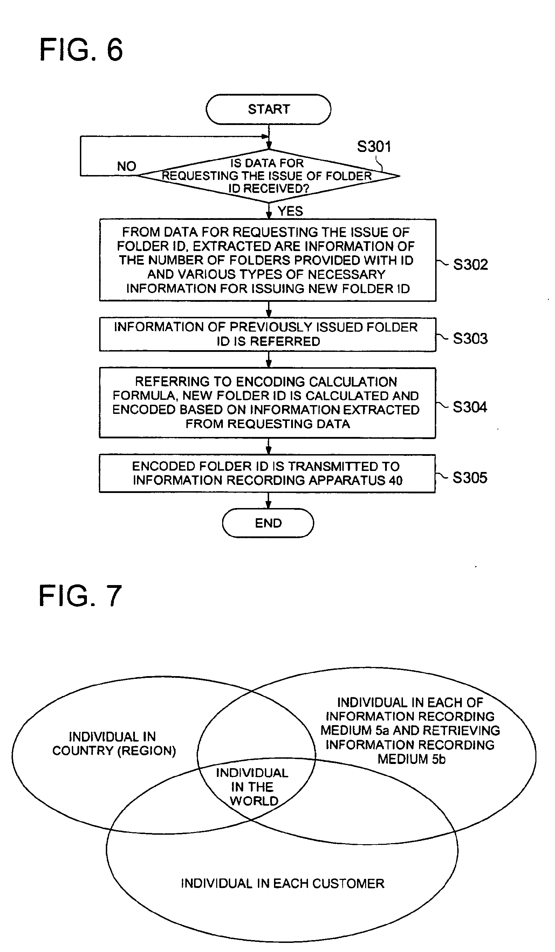

Subsequently, issuing steps of the folder ID employing server 8 will be described with reference to the flow chart in Fig. 6.

As shown in Fig. 6, server 8 identifies whether data for requesting the issue of folder ID is received from information recording terminal 40 via network N (step S301). When not received (step S301; NO), waiting is lasts. When received (step S301; YES), various types of necessary information for issuing new folder ID are extracted from data for requesting the issue of folder ID (step S302).

Subsequently, server 8 refers to database provided in server 8, decides specific ID (step S303), and encodes folder ID based on an encoding calculation formula (step S304). Thereafter, server 8 transmits encoded folder ID to information terminal 40 (step S305) and terminates the folder ID issuing process.

Incidentally, even though various methods are available for encoding folder ID executed by server 8, one example follows.

When a method is employed in which lower digit byte A of the sum of characters of a directory name, lower digit byte B of the sum of the number of bytes of image information recorded on a folder, and serial number C are multiplied and rearranged utilizing an optional encoding function, in the case in which A is 127, B is 187, and C is 13349, the calculated figure is 317,025,401. When the resulting figure is rearranged for every two digits, 03/17/02/54/01 is converted to 30/71/20/45/10, namely to 3,071,2045,510.

In the above example, an example is described in which folder ID is encoded based on the serial number. Being not limited to the above, it is possible to perform encoding employing various types of information, other than the serial number, included in data for requesting the issue of ID which is received from information recording terminal 40, employing server 8.

As stated above, server 8 performs the issue of folder ID specific to each holder and management. Further, in order to encode folder ID and supply it, server 8 prevents alteration of folder ID and maintains individuality of the folder ID.

Individual folder ID given to a folder to store image information will now be described with reference to Figs. 7 - 9.

Fig. 7 is a conceptual view showing the range in which folder ID remains individuality.

As shown in Fig. 7, methods for deciding individual folder ID include, for example, a method in which decision is individually made in regions (such as a country), a method in which decision is individually made for each of the suppliers of information recording medium 5a and retrieving information recording medium 5b, and a method in which decision is individually made to each of the users, and a method in which decision is individually made in the world.

In the above folder ID making methods, except for using folder ID which is specific in the world, there is possibility of the presence of folders provided with the same ID. For example, when customer 2 and another customer 9 belong to different regions and ID is decided in each region, in the case in which information recording medium 5a is exchanged between these customers, problems occur in which in spite of the fact that different types of information are recorded, the same folder ID is given. As a result, in the present information recording system 1, it is most preferable to use folder ID specific in the world. In other ID making methods, when duplication of folder ID is discovered, it is preferable to quickly alter file ID to maintain individuality of the folder ID.

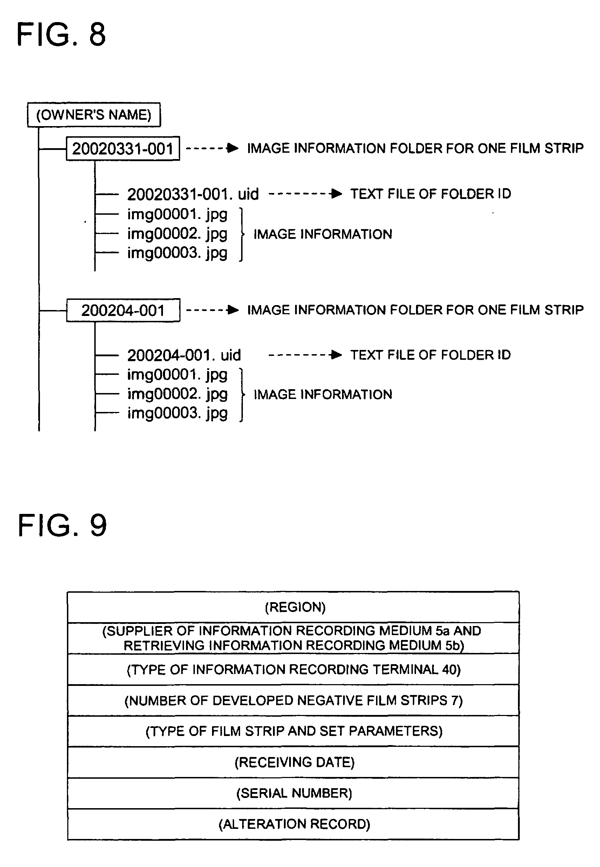

Fig. 8 is a view showing a data structure on information recording medium 5a. In the example shown in Fig. 8, on information recording medium 5a provided with an owner name (the name of customer 2), two folders 20020331_001 and 200204_001 are made which are provided with individual folder ID per one developed negative film strip. Further, folder ID text file 20020331_001.uid and image information files img00001.jpg, img00002.jpg, and img00003.jpg are made to correspond to each other, are stored in folder 20020331_ 001, while folder ID text file 20020331_001.uid and image information files img0001.jpg, img0002.jpg, and img0003.jpg are made to correspond to each other and stored in folder 20020331_001.

Information, which is incorporated into folder ID during an ID issuing process, will now be described with reference to Fig. 9.

As shown in Fig. 9, folder ID is composed of information of the region where information recording terminal 40 is located, information of a supplier of information recording medium 5a and retrieving information recording medium 5b, information of a type of information terminal 40, information of the number of developed negative film strips, DX code information (when images are supplied from customer 2 in the form of information recording medium, information of the serial number of the information recording medium), and information of receiving date of negative film strip 6. Further, when image information is altered by customer 2 or another customer 9, information of alteration recording is further added to folder ID.

Operations will now be described.

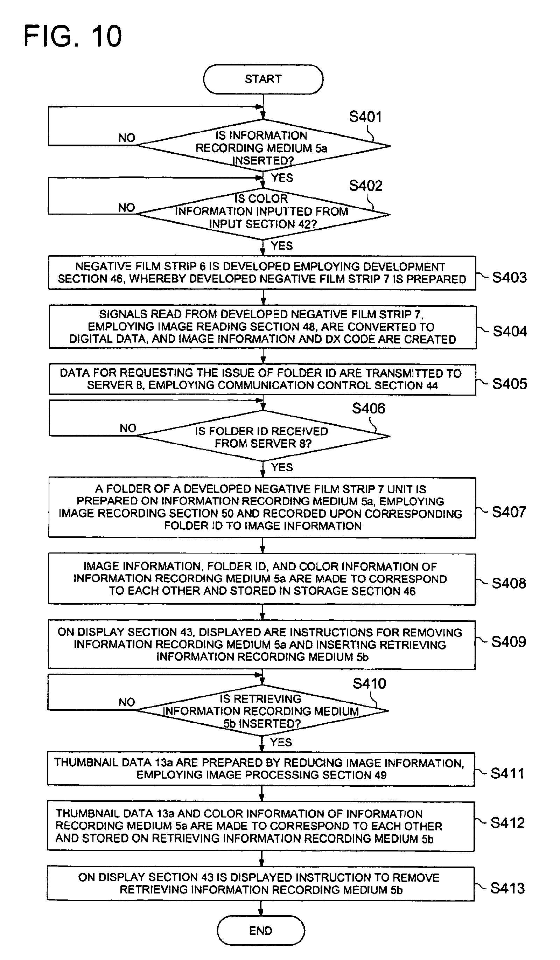

Programs which realize each process described in the flow chart of Fig. 10 are stored in storage section 46 in the form of computer readable program codes, and CPU 41 executes successively operations based on the aforesaid program codes.

Fig. 10 is a flow chart showing the information recording process executed by CPU 41 of information recording terminal 40. In the information recording process, CPU identifies whether information recording medium 5a is installed in information recording terminal 40 (step S401). When installed (step S401; YES), the above CPU identifies whether color information of information recording medium 5a is inputted from input section 42 (step S402). When the above color information is inputted (step S402; YES), negative film strip 6 is developed employing development section 46, whereby developed negative film strip 7 is prepared (step S403).

Subsequently, CPU 41 controls image reading section 48 and reads images as well as DX code recorded on developed negative film strip 7, and converts the reading to digital data, whereby image information and DX code information are prepared (step S404). Thereafter, data for requesting the issue of folder ID provided to a newly prepared folder are transmitted to server 8 employing communication control section 44 (step S405). When folder ID is received from server 8 (step S406; YES), a folder is prepared in information recording medium 5a in the form of one unit of developed negative film strip 7. Subsequently, folder ID received from server 8 is used as the folder name, and the folder ID and image information are made to correspond to each other and stored (step S407).

Subsequently, CPU 41 makes image information recorded on information recording medium 5a, folder ID, and color information of information recording medium 5a to correspond to each other and allows those to be stored in storage section 46 (step S408). Subsequently, on message display section 43, displayed is a message which indicates to remove information recording medium 5a and to insert retrieving information recording medium 5b (step S409). Thereafter, CPU 41 identifies whether retrieving information recording medium 5b has been installed (step S410). When identified of the installment (step S410; YES), image information (the present image data) is reduced employing image processing section 49 to form thumbnail data 13a (step S411). Subsequently, formed thumbnail data 13a and color information of information recording medium 5a are made to correspond to each other and recorded on retrieving information recording medium 5b (step S412), and a message indicating removal of retrieving information recording medium 5b is displayed (step S413), whereby the information recording process is completed.

Incidentally, in an image recording process employing CPU 41, for example, after performing photographic processing of negative film strip 6 and a receiving process of folder ID, removal of information recording medium 5a and input of color information are identified and information may be recorded on information recording medium 5a. Processing order is not limited to the above. Further, in the above example, a case is described in which negative film strip 6 is submitted by customer 2. When information recording media such as CD-R are submitted instead of negative film strip 6, information recording terminal 40 reads image information recorded on the above information recording medium and serial number, and record them on information recording medium 5a.

As stated above, in the information recording process, CPU 41 of radiation image processing apparatus 10 develops negative film strip 6 employing development section 46, prepares developed negative film strip 7, and reads image information from the developed negative film strip 7. Further, CPU 41 receives, from server 8, folder ID which is calculated and encoded based on information of the region where information recording terminal 40 is located, information of the supplier of information recording medium 5a and retrieving information recording medium 5b, information of the type of information recording terminal 40, information of the number of developed negative film strips, and information of the film type obtained from the DX code of developed negative film strip 7 and receiving date when customer 2 submitted negative film strip 6 to convenience store 3.

Subsequently, one folder is prepared in information recording medium 5a for one developed negative film strip 7, and folder ID received from server 8 and image information read from developed negatives film 7 are made to correspond to each other, and recorded in the prepared folder. Simultaneously, thumbnail data 13a which are created based on image information, color information of information recording medium 5a, and folder ID are made to correspond to each other and recorded on retrieving information recording medium 5b.

Consequently, by issuing individual ID in a folder unit in which information is stored, it is possible to correctively manage image information and easily identify image information. As a result, customer 2 can save labor and time which have been required for management and retrieval of image information and can enjoy while easily making use of image information. Further, based on color information provided on information recording medium 5a, it is possible to easily look for desired information recording medium 5a.

Further, by using various types of information included in folder ID, the following effects are realized. For example, based on the information of a model of information recording terminal 40, input color characteristics of the above terminal are obtained, whereby when image information is used at computer terminal 2a, it is possible to enhance reproducibility of image color characteristics. Further, based on information of types of film strips, it is possible to adjust the difference in color due to the film type. Still further, since the type change of film strips manufactured by film suppliers occurs every several years, it is possible to estimate the image capturing time range based on the type of the film strip.

Incidentally, in the above embodiments, image information is collectively managed by providing, with individual identification information, a folder which is prepared for every negative film strip 7 which is a source for reading image information. However, in addition, it is naturally possible to provide, with individual identification information, information recording medium 5a as well as retrieving information recording medium 5b, or each unit of image information.

In the above, it is stated that sever 8 collectively manages the issuing process of the folder ID. However, for example, the unit of suppliers of information recording medium 5a as well as retrieving information recording medium 5b, or ID in a regional unit may previously be decided and ID may individually be managed depending on each of the suppliers or the regions. Further, image information, folders, and image recording medium 5a may be managed by corresponding identification information prepared by serially numbering individual ID for each customer or individual ID for each information recording terminal 40 to image information, folders, or information recording medium 5a. Further, for example, when image information is recorded on MO on which identification information for protecting the copyright is recorded, image information may be managed by preparing folder ID upon combining the aforesaid identification information with information of the supplier of recording media, information of information recording terminals, and information of the region and time regarding the aforesaid recording media.

Furthermore, in the above embodiment, mainly described is a case in which customer 2 submits image information in the form of negative film strip 6. On the other hand, for example, when customer 2 submits, to laboratory 4, information recording media on which image information captured by a digital camera or image information processed by a personal computer is recorded, it is possible to identify image information by adding individual folder ID to the folder in which image information is divided based on the image captured date and time, the preparation date and time, and the amount of image data. In practice, identification information, in which ID specific to a digital camera (for example, a production number) is serially numbered, is issued by the above digital camera, or identification information in which ID specific to a computer, which creates image information, is serially numbered is issued by the above computer. Subsequently, the issued identification information may be recorded on an information recording medium along with image information. In such a case, issued identification information is managed by allowing a memory means incorporated in a digital camera or a computer to store the issued identification information.

Furthermore, in the above embodiment, DX code information which is obtained from the DX code of developed negative film strip 7 submitted by customer 2, or information of the serial number obtained from information recording media supplied from customer 2 is included in folder ID for specifying image information. However, for example, other various types of information (information of different types of information recording media, recording capacity, the number of recorded files, image capturing date and time, and image processing date and time) are read and included in folder ID. By doing so, since it is possible to obtain detailed image information employing the folder ID, it is possible to efficiently use image information.

Further, in the above embodiment, described is an example in which thumbnail data 13a read from a plurality of negative film strips 6 and the present image data corresponding to thumbnail data 13a are recorded on individual information recording medium 5. However, the thumbnail data and the present image data are on same information recording medium 5. For example, as shown in the image list display screen (Fig. 4), a list of thumbnail data 13a is displayed. When thumbnail data are selected on this screen, the corresponding present image data are displayed on the whole screen. It is possible to perform this method when the amount of image information including thumbnail data and the present image data does not exceed the memory capacity of information recording medium 5. Accordingly, it is unnecessary to replace information recording medium 5.

Furthermore, during the information recording process, information of the region where information recording terminal 40 is located is included in data requesting for the issue of ID which are transmitted to server 8 by information terminal 40. Instead of it, for example, information of the region where customer 2 lives as well as information of the location of convenience store 3 may be employed.

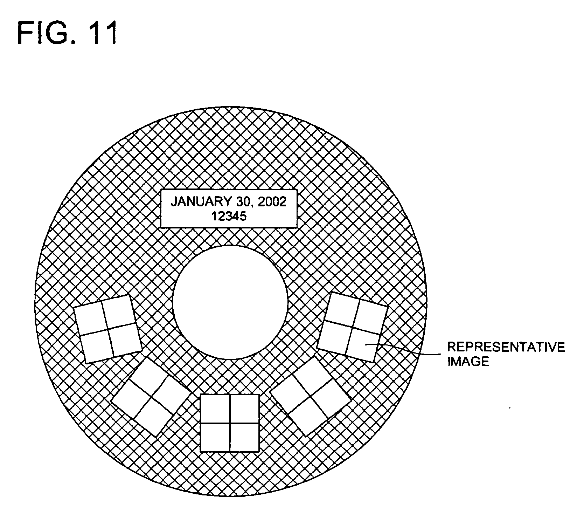

Further, in the present embodiment, visual identification is enhanced by coloring information recording medium 5a. However, for example, as shown in Fig. 11, a representative image for every folder stored in information recording medium 5a, receiving date, and ID specific to information recording medium 5a may be printed on information recording medium 5a. Further, when a representative image for every folder is decided and recorded on information recording medium 5a, information recorded on information recording medium 5a is easily visually recognized by inserting information recording medium 5a into computer terminal 2a and printing the aforesaid representative image.

Furthermore, in the above embodiment, it is possible to appropriately change the detailed constitution and detailed operation of information recording system 1 without departing from the spirit and scope of the present invention.

### APPLICATION POSSIBILITY TO INDUSTRIES

According the invention described in any one of Structures 1, and 9 - 11, it is possible to perform collective management of image data obtained from a captured image in a group unit and to efficiently use the same. For example, a slide show may comfortably be enjoyed by simplifying the operation of selection of image information and corresponding operation. Further, since it is unnecessary to provide an information recording terminal specific for recording identification information, it is possible to lower cost.

According to Structure 2, it is possible to maintain, for example, a group of image information in a film strip unit such as a folder or individuality of recording media by preventing or detecting tampering of the data structure of image information recorded on recording media as well as identification information.

According to Structure 3, image information and identification information are made to correspond to each other and stored, whereby when the image information recorded on a recording medium is lost or altered, it is possible to retrieve corresponding image information stored in the storage means utilizing the identification information and again provide the desired information.

According to Structure 4, it becomes possible to more efficiently manage image information by utilizing various types of information which correspond to image information.

According to Structure 5, in the case in which a recording medium recorded with image information is loaded in a computer and enables the computer to display the image information, it is possible to eliminate the difference in input color characteristics depending on types of information recording terminals and to enhance the color reproduction of image information.

According to Structure 6, it is possible to utilize identification information for the image processing and control of image information in such a manner that the photographic speed, the number of exposed frames, and the types of film strips used to capture images are read based the film DX code, and serial number information is read based on the information recorded on other recording media and the identification information of the image information is included. For example, based on the information of the type of a film strip included in the DX code read from the other recording media and the serial number, it is possible to estimate the time frame when a film strip was exposed.

According to Structure 7, it is possible to easily identify a recording medium only by viewing it without reference to the information recorded on the recording medium.

According to Structure 8, since it is possible to visually identity recording media based on visible color applied to recording media without reference to the information recorded on the recording media, it is possible to more easily look for the desired recording medium.

## Claims

1. An information recording method, comprising steps of:
creating an identification information specific to either one of an image information containing an image datum or a recording medium; and
recording the image information and the identification information on the recording medium, by corresponding the image information and the identification information to each other.

2. The information recording method in claim 1, further comprising a step of:
encoding the created identification information.

3. The information recording method in claim 1, further comprising a step of:
storing the corresponded image information and identification information in a storage device, by corresponding the image information and the identification information to each other.

4. The information recording method in claim 1, wherein the identification information includes:
an information of an owner of the recording medium;
an information of a recording device for recording the image information and the identification information on the recording medium; and
an information of at least one of an area and time related to the recording medium.

5. The information recording method in claim 1, wherein the identification information includes:
an information of a color conversion process of the image information.

6. The information recording method in claim 1, wherein
the image data are those which are read out from a second recording medium other than the recording medium, and
the identification information includes at least either one of DX code information or serial number information, which are read from the second recording medium.

7. The information recording method in claim 1, wherein
the identification information is recorded as a visible information on some part of the recording medium.

8. The information recording method in claim 7, wherein
the visible information is recorded using color which is easily identified.

9. An information recording terminal, comprising:
an identification information creating device for creating an identification information being identical to either one of an image information containing an image datum or a recording medium; and
a recording device for corresponding the image information and the identification information to each other, and recording the corresponded image information and identification information on the recording medium.

10. An information recording system, comprising an information recording terminal and a control device, both of which are connected each other via a network,
wherein the information recording terminal includes:
a first transmission device for transmitting an issuing request of an identification information to the control device;
a first receiving device for receiving the identification information from the control device;
an identification information providing device for providing the received identification information to at least one of an image information including image data and a recording medium; and
a recording device for recording the image information and the identification information in the recording medium by corresponding the image information and the identification information to each other;
and wherein the control device includes:
a second receiving device for receiving the issuing request of the identification information from the information recording terminal;
an identification issuing device for issuing the identification information based on the received issuing request; and
a second transmission device for transmitting the identification information to the information recording terminal.

11. A recording medium wherein an image information and an identification information specific to either one of an image information or a recording medium are corresponded each other.
